# EUROPEAN PATENT APPLICATION

(11) **EP 4 458 924 A1**
(43) Date of publication of application: **06.11.2024**
(21) Application number: 23171365.2
(22) Date of filing: 03.05.2023
(51) Int. Cl.: C09K 11/58, C09K 11/67

(54) **PHOTON UP-CONVERSION FILM**

(71) Applicant: Peafowl Plasmonics AB, 756 51 Uppsala (SE)
(72) Inventor: SÁ, Jacinto, 756 43 UPPSALA (SE); ZOU, Xianshao, 752 73 UPPSALA (SE)
(74) Representative: Brann AB

(57) **Abstract**

A film (10) for photon up-conversion is proposed. The film (10) comprises: a first semiconductor material (24) and nanoparticles (28). The first semiconductor material (24) has a first trap state (48), a second trap state (50), and a third trap state (52) between the valance band (44) and the conductions band (46). The first trap state (48) is below the second trap state (50) and above the third trap state (52). Photo-excitation is possible from the valance band (44) to first strap state and from the first trap state (48) to the second trap state (50), and photo-deexcitation is possible from the second trap state (50) to the third trap state (52). The nanoparticles (28) are plasmonic nanoparticles (28) arranged to enhance photo-excitation from the valence band to at least the first trap state (48) at a formation of localized surface plasmons by the nanoparticles (28).

## Description

### Technical field

The proposed technology relates to glazing for reducing passage of solar infrared radiation through windows. The proposed technology further relates to the field of photon up-conversion, and specifically to films for photon up-conversion.

### Background

Glass used in windows or screens allow passage of solar infrared radiation, which contributes to heat the environment behind the glass, such as the room of a building or the passenger compartment of a vehicle. This heating may be disadvantageous, for example in airconditioned buildings.

There are two dominant solutions to reduce the passage of infrared radiation through glass, namely passive glazing and dynamic glazing. Passive glazing uses coatings that reflect infrared radiation, for example an ultrathin silver layer. Higher rejection of infrared radiation increases cost and decreases visible light transmission. In dynamic glazing, electrochromic applications stand out as the most promising for buildings. Infrared radiation is reflected by electrically charging a semiconductor layer. Such systems can provide up to 20 % energy savings in cooling buildings. However, this significantly reduces the amount of visible light that enters the building, potentially affecting indoor environments negatively. This technology may also be prohibited in historic and listed buildings. Additionally, the system is relatively expensive and needs electric cabling, which limits the applicability to new buildings.

Optical up-conversion is a process that converts two or more low-energy photons into a single high-energy photon. This is used in glazing to convert infrared radiation into desirable visible light, thus reducing undesirable heating without affecting the transmission of visible light. The most common technology is based on triplet-triplet annihilation, where long-lived atomic or molecular excited states store photon energy. Higher energy state can then be reached through energy transfer or subsequent absorption, leading to the emission of photons with higher energy. These molecular systems are unpractical due to low stability and fast triplet deactivation through vibrational relaxation, which operates on similar times scales as the photon up-conversion.

### Object

It is an object of the proposed technology to provide an improved solution to inhibit the passage solar infrared radiation through a window. It is further an object to provide a solution that is low-cost, retrofittable, and has a low degree of maintenance. It is further an object to provide a solution that has less or no impact on solar visible light.

### Summary

According to a first aspect of the proposed technology, a film, or sheet, for photon up-conversion is proposed. The film comprises: a first semiconductor material, and nanoparticles. The first semiconductor material has a valance band and a conduction band. The first semiconductor material further has a first trap state, or first intraband state, a second trap state, or second intraband state, and a third trap state, or third intraband state, between the valance band and the conductions band. The first trap state is below the second trap state and above the third trap state. Photo-excitation is possible from the valance band to the first trap state and from the first trap state to the second trap state, and photo-deexcitation is possible from the second trap state to the third trap state. The nanoparticles are plasmonic nanoparticles, and the nanoparticles may be arranged to enhance photo-excitations from the valence band to at least the first trap state at a formation of localized surface plasmons by the nanoparticles, or to enhance electron population in the first trap state by photoexcitation of electrons in the valence band at a formation of localized surface plasmons by the nanoparticles.

Wording the first aspect differently, the first semiconductor material has a valance band and a conduction band, wherein the first semiconductor material further has a first trap state, or first intra-band state and a second trap state, or second intra-band state, between the valance band and the conductions band. The first trap state is below the second trap state, photo-excitation is possible from the valance band to first strap state and from the first trap state to the second trap state, and recombination or photo-deexcitation is possible from the second trap state to the valence band or to a third trap state, or third intra-band state, that is between the valance band and the conduction band and below the first trap state. The nanoparticles are plasmonic nanoparticles, and the nanoparticles may be arranged to enhance photo-excitations from the valence band to at least the first trap state at a formation of localized surface plasmons by the nanoparticles, or to enhance electron population in the first trap state by photoexcitation of electrons in the valence band at a formation of localized surface plasmons by the nanoparticles.

A trap state is understood as an electronic state within the bandgap of a semiconductor capable of accepting electrical carriers. It is further understood that the localized surface plasmons are formed by light interacting with the nanoparticles, for example sunlight illuminating the film. Here, a photo-excitation is understood as an excitation in which a single photon is absorbed, and a photo-deexcitation is understood as a deexcitation in which a single photon is emitted.

It is specified that the first trap state is below the second trap state and above the third trap state. This means that the first trap state has a first energy level, the second trap state has a second energy level, and the third trap state has a third energy level, with the first energy level being below the second energy level and above the third energy level. For example, the energy levels of the trap states may be relative to the valence band. The first trap state may be a trap hole state. The second trap state may be a trap electron state. The third trap state may be a trap hole state.

The fact that first trap state is below the second trap state and above the third trap state means that the energies of the photons absorbed in the transitions from the valance band to the first strap state and from the first trap state to the second trap state are lower than the energies of the photons emitted in the transition from the second trap state to the third trap state, effectively resulting in an up-conversion of the photon energies. The nanoparticles are arranged to enhance the photoexcitation from the valence band to at least the first energy level at a formation of localized surface plasmons by the nanoparticles. This means that photons having different energies than those involved in the transitions between the trap state contribute to enhance the up-conversion.

It is understood that the nanoparticles are located at the semiconductor material, or within sufficient distance to the semiconductor material to achieve the enhanced photo-excitation. It is contemplated that localized surface plasmon resonance contributed to the enhanced photo-excitations. It is further understood that the nanoparticles may also enhance photo-excitations from the first trap state to the second trap state at a formation of localized surface plasmons by the nanoparticles. Worded differently, the nanoparticles may also enhance electron population in the second trap state by photoexcitation of electrons in the first trap state at a formation of localized surface plasmons by the nanoparticles.

The film may be transparent or translucent. The first semiconductor material may be TiO2. Alternatively, it may be ZnO, Li-doped ZnO, perovskite, or quantum dots.

The nanoparticles may be metal nanoparticles, for example selected from gold, silver, copper, and aluminum nanoparticles. This means that the nanoparticles are composed only of metals. Alternatively, the nanoparticles may have a nonmetal coating, as described below.

The nanoparticles may have an elliptical shape, such as a spherical shape. It has been found that this non-complex shape is sufficient to achieve the enhanced photo-excitation. It is understood that the nanoparticles can have other shapes.

The formation of localized surface plasmons depends on the wavelength of the photons and the size of the nanoparticles. The nanoparticles may be arranged to form, or have a size distribution forming, localized surface plasmons by photons having wavelengths in the visible range, such as between 370 to 800 nm. More specifically, at least 50% of the nanoparticles may be arranged to form localized surface plasmons by photons having wavelength in the range 450 to 550 nm. This way, the film is optimized for use in direct sunlight at sea level.

The nanoparticles may have an average size, or average maximum dimension, within the range 10 to 300 nm, or within the range 20 to 200 nm. Here, a maximum dimension of an object is understood as the distance between the most distant points on the outer surface of the object. If the nanoparticles have a spherical shape, as mentioned above, the maximum dimension corresponds to the diameter of the nanoparticle.

The nanoparticles may form, or define, a size distribution. It is understood that the size distribution is discrete and ordered according to the size, or average maximum dimension, of the nanoparticles. This means that the size distribution is an ordered data set. The size distribution has a median in the range 50 to 150 nm. The size distribution may further have a lower quartile value in the range 10 to 50 nm and/or an upper quartile value in the range 150 to 200 nm. A brief description of the lower and upper quartile values follows. The dataset is divided into two halves by determining the median. If the number of data points in the data set is odd, the median is included in both halves, and if the number of data points in the data set is even, the dataset is split exactly in half. The lower quartile value is the median of the lower half of the data, and the upper quartile value is the median of the upper half of the data.

The nanoparticles may be insulated from the first semiconductor material by an electrically insulating material. It is understood that the electrically insulating material may be a composite material composed of several different materials. It is further understood that the insulating material may prevent, or inhibit, charge transfer between the nanoparticles and the first semiconductor material at the formation of localized surface plasmons by the nanoparticles. The electrically insulating material may be transparent to electric fields. Worded differently, the electrically insulating material may have a relative permittivity that is less than 5, or less than 3. For example, the electrically insulating material may be a polymer, such as polytetrafluoroethylene, polyethylene, and polypropylene. It may be a ceramic or an oxide material. The electrically insulating material may contribute to prevent, or inhibit, charge transfer between the nanoparticles and the first semiconductor material, which in extension may contribute to improve the enhancement of the photo-excitation. Thus, wording the above insulating function differently, the nanoparticle may be arranged to prevent, or inhibit, charge injection in the first semiconductor material.

The film may further comprise: a first semiconductor layer of, or comprising, the first semiconductor material, and a nanoparticle layer comprising the nanoparticles. The first semiconductor layer and the nanoparticle layer form a layered structure. A layer is understood as a sheet-like structure or a structure extending primarily in two dimensions.

The first semiconductor layer may be a solid layer of the first semiconductor material. This means that the first semiconductor layer is not composed of semiconductor particles. The first semiconductor layer may be monolithic, which means that it does not have any sub-layers. Instead of the first semiconductor layer being a solid layer, it may be a powdered layer composed of semiconductor particles of the first semiconductor material. The semiconductor particles may have an average size, or average maximum dimension, within the range 20 to 1000 nm, or within the range 40 to 500 nm. The first semiconductor layer may be continuous, which means that it does not form any through-going holes or gaps.

The first semiconductor layer may have an average thickness that is greater than 1µm. Alternatively, the first semiconductor layer may have an average thickness in the range 20 to 1000 nm, or in the range 40 to 500 nm.

The first semiconductor layer and the nanoparticle layer may be juxtaposed. This means that the nanoparticle layer is in direct contact with the first semiconductor layer. For example, when manufacturing the film, the first semiconductor layer may constitute a substrate on which the nanoparticle layer is formed. The nanoparticle layer may be monolithic and/or continuous. For example, the nanoparticle layer may be formed by inkjet printing, spin-coating, or immersion.

The nanoparticles, or at least 90% of the nanoparticles, may be in direct contact with, or positioned at, the first semiconductor layer, or the first semiconductor material of the first semiconductor layer.

The nanoparticles may be arranged in a sub-monolayer. This means that the nanoparticles are situated sparsely from each other. The average distance between neighboring nanoparticles may be in the range 20 to 200 nm, or in the range 40 to 100 nm. This contributes to a favorable formation of localized surface plasmons enhancing the photoexcitation. The nanoparticle layer may be constituted by, or composed of, the sub-monolayer. This means that the nanoparticle layer does not have any other constituents than the sub-monolayer. For example, the sub-monolayer may be formed by nanoparticles covering up to 25 %, or up to 50%, of the first semiconductor material.

It is specified above that the nanoparticles may be insulated from the first semiconductor material by an electrically insulating material. For example, the film, or the nanoparticle layer, may further comprise a coating of the insulating material on each nanoparticle. The coating may be individual, which means that the nanoparticle and the coating jointly forms an individual particle. The coating may have an average thickness in the range 0.5 to 100 nm, or in the range 1 to 50 nm. This way, charge transfer is inhibited even though the coated nanoparticles are in direct contact with the first semiconductor material.

If the nanoparticles are arranged in a sub-monolayer, the average thickness of the nanoparticle layer may correspond to the average size, or average maximum dimension, of the nanoparticles.

The nanoparticles, or at least 90% of the nanoparticles, may be spaced apart from the first semiconductor layer. Worded differently, the nanoparticles may be spaced apart from the first semiconductor layer by an average distance, or average separation, in the range 5 to 200 nm, or in the range 10 to 100 nm. For example, this may be achieved by the first intermediate layer described below or by the coating of the nanoparticles described above.

The nanoparticle layer may comprise a carrier material that supports the nanoparticles relative to the first semiconductor layer, wherein the nanoparticles are dispersed within the carrier material. The nanoparticles may be evenly dispersed within the carrier material. The nanoparticle layer may then have an average thickness in the range 20 to 600 nm, or in the range 40 to 400 nm. The average distance between neighboring nanoparticles in the carrier material may be in the range 10 to 300 nm, or in the range 20 to 200 nm. This contributes to a favorable formation of localized surface plasmons enhancing the photoexcitation.

It is specified above that the nanoparticles may be insulated from the first semiconductor material by an electrically insulating material. Worded differently, the nanoparticles may be insulated from the first semiconductor layer by an electrically insulating material. For example, the electrically insulating material may constitute the carrier material, or vice versa. This means that the nanoparticles are dispersed within the electrically insulating material.

The film may further comprise a first intermediate layer positioned between the first semiconductor layer and the nanoparticle layer. It is understood that the first intermediate layer forms part of the abovementioned layered structure. It is further understood that the first intermediate layer may separate the first semiconductor layer and the nanoparticle layer, or that it may space the first semiconductor layer and the nanoparticle layer apart. It is further understood that the first intermediate layer may be monolithic and/or continuous. For example, it may be composed of a single material or structure.

The first semiconductor layer and the first intermediate layer may be juxtaposed, and the nanoparticle layer and the first intermediate layer may be juxtaposed. The first intermediate layer may be in direct contact with the first semiconductor layer and the nanoparticle layer. This means that there is no other layer than the first intermediate layer between the first semiconductor layer and the nanoparticle layer. When manufacturing the film, the first semiconductor layer may constitute a substrate on which the first intermediate layer is formed, and the nanoparticle layer is in turn formed on the first intermediate layer. Both the intermediate layer and the nanoparticle layer may be formed separately by inkjet printing, spin-coating, or immersion.

The first intermediate layer may be formed from an electrically insulating material, for example the electrically insulating material described above. This way, the first intermediate layer insulates the nanoparticles from the first semiconductor material of the first semiconductor layer. As described above, this contributes to prevent, or inhibit, charge transfer between the nanoparticles and the first semiconductor material, which in extension may contribute to improve the enhancement of the photo-excitation.

The nanoparticles, or at least 90% of the nanoparticles, may be in direct contact with, or positioned at, the first intermediate layer. Alternatively, the nanoparticles, or at least 90% of the nanoparticles, may be spaced apart from the first intermediate layer, for example by being dispersed within the abovementioned carrier material. The first intermediate layer may have an average thickness in the range 5 to 200 nm, or in the range 10 to 100 nm.

The film may comprise a second semiconductor layer of, or comprising, a second semiconductor material. It is understood that the second semiconductor layer forms part of the abovementioned layered structure. The second semiconductor layer may have any of the features, or combination of features, of the first semiconductor layer described above. For example, the second semiconductor may be a solid, monolithic, and continuous layer. The second semiconductor material may be the same as the abovementioned first semiconductor material. Alternatively, it is a different semiconductor material having the initially described features of the first semiconductor material but with different energy levels of the trap states. For example, this may be achieved by doping the second semiconductor material. This allows for photons having different wavelengths to be up-converted by the film.

The second semiconductor layer and the nanoparticle layer may be juxtaposed. For example, this may be with the nanoparticles being metal nanoparticles or having a coating of the insulating material, as described above.

When manufacturing the film, the second semiconductor layer may be formed on the nanoparticle layer. The nanoparticles, or at least 90% of the nanoparticles, may be in direct contact with the second semiconductor layer, or the second semiconductor material of the second semiconductor layer. Alternatively, the nanoparticles, or at least 90% of the nanoparticles, may be spaced apart from the second intermediate layer, for example by being dispersed within the above-mentioned carrier material or by having the above-mentioned coating. For example, the second semiconductor layer may be formed by inkjet printing.

It is described above that the nanoparticle layer may comprise a carrier material that supports the nanoparticles relative to the first semiconductor layer. Similarly, the carrier material may support the nanoparticles also relative to the second semiconductor layer. For example, the carrier material may be arranged to bind, or fix, the second semiconductor layer relative to the first semiconductor layer.

It is specified above that the nanoparticles may be insulated from the first semiconductor material by an electrically insulating material. The film may further comprise a second intermediate layer positioned between the second semiconductor layer and the nanoparticle layer. It is understood that the second intermediate layer forms part of the abovementioned layered structure. It is further understood that the second intermediate layer may separate the second semiconductor layer and the nanoparticle layer, or that it may space the second semiconductor layer and the nanoparticle layer apart.

The second semiconductor layer and the second intermediate layer may be juxtaposed, and the nanoparticle layer and the second intermediate layer may be juxtaposed. The second intermediate layer may be in direct contact with the second semiconductor layer and the nanoparticle layer. This means that there is no other layer than the second intermediate layer between the second semiconductor layer and the nanoparticle layer. When manufacturing the film, the second intermediate layer may be formed on the nanoparticle layer, and the second semiconductor layer may be formed on the second intermediate layer, for example by inkjet printing.

The nanoparticles, or at least 90% of the nanoparticles, may be in direct contact with, or positioned at, the second intermediate layer. Alternatively, the nanoparticles, or at least 90% of the nanoparticles, may be spaced apart from the second intermediate layer, for example by being dispersed within the abovementioned carrier material.

The second intermediate layer may have any of the features, or combination of features, of the first intermediate layer described above. For example, the second intermediate layer may be monolithic and/or continuous, it may be composed of a single material or structure, and/or the second intermediate layer may be formed from an electrically insulating material, such as the electrically insulating material described above. The latter contributes to prevent, or inhibit, charge transfer between the nanoparticles and the second semiconductor material.

It is described above that the film may comprise a first semiconductor layer and a nanoparticle layer that form a layered structure. Alternatively, the film may comprise: a single layer comprising the first semiconductor material and the nanoparticles, wherein the nanoparticles are dispersed within the single layer. For example, the single layer may be formed using inkjet printing or spin-coating with an ink containing the semiconductor material and the nanoparticles.

The first semiconductor material of the single layer may form a monolithic and/or continuous solid structure with the nanoparticles dispersed within the first semiconductor material. It is understood that the structure of the first semiconductor material and the nanoparticles jointly forms the single layer.

The nanoparticles may be in direct contact with the first semiconductor material. As mentioned above, the nanoparticles may be insulated from the first semiconductor material by an electrically insulating material. For example, the film may further comprise a coating of the insulating material on each nanoparticle. The coating may be individual, which means that the nanoparticle and the coating jointly forms an individual particle. The coating may have an average thickness in the range 0.5 to 100 nm, or in the range 1 to 50 nm. This way, charge transfer is inhibited between the nanoparticles and the first semiconductor material.

The first semiconductor material of the single layer may be composed of, or comprise, semiconductor particles, wherein the nanoparticles are blended, or mixed with the semiconductor particles. The semiconductor particles may be arranged in a multilayer structure, and the nanoparticles may be dispersed within the multilayer structure, or between the semiconductor particles. The nanoparticles may be evenly dispersed, which contributes to improve the enhancement of the excitation.

The single layer may comprise a binder material fixing the position of the semiconductor particles and the nanoparticles in the multilayer structure, or relative to one another. The film may comprise a transparent or translucent support layer arranged to support the single layer.

It is specified above that the nanoparticles may be insulated from the first semiconductor material by an electrically insulating material. For example, the electrically insulating material may constitute the binder material, or vice versa. The nanoparticles and the semiconductor particles may be dispersed within the binder material.

Alternatively to the binder material, the single layer may comprise a carrier material, and the semiconductor particles and nanoparticles are dispersed within the carrier material. It is understood that the carrier material may fixe the relative positions of the semiconductor particles and the nanoparticles. The carrier material, semiconductor particles, and nanoparticles may jointly form a continuous structure. The continuous structure may be solid. For example, the single layer may have a thickness in the range 1 to 2000 pm, or in the range 10 to 1000 µm. For example, the carrier material may be a polymer, such as polyacrylate, polytetrafluoroethylene, polyethylene, or polypropylene. It is specified above that the nanoparticles may be insulated from the first semiconductor material by an electrically insulating material. For example, the electrically insulating material may constitute the carrier material, or vice versa.

It is described above that each nanoparticle may have a coating of the insulating material. Additionally, or alternatively, the film may comprise a coating of the insulating material on each semiconductor particle. The coating may be individual, which means that the semiconductor particle and the coating jointly forms an individual particle. This coating may have an average thickness in the range 0.5 to 100 nm, or in the range 1 to 50 nm. The coatings described here contribute to space the nanoparticles and the semiconductor particles apart and to reduce charge transfer between them.

It is understood that the semiconductor particles are of a semiconducting material. For example, the semiconductor particles may be of TiO2, ZnO, Li-doped ZnO, or perovskite. The semiconductor particles may have an average size, or average maximum dimension, that is in the range 1 to 100 times, or 2 to 50 times, greater than the average size, or average maximum dimension, of the nanoparticles. Additionally, or alternatively, the semiconductor particles may be semiconductor quantum dots, for example having an average size, or average maximum dimension, in the range 1 to 30 nm, or 2 to 20 nm.

Neighboring nanoparticles and semiconductor particles may be spaced apart from one another by an average distance, or separation, in the range 10 to 300 nm, or in the range 20 to 200 nm. This may be achieved by evenly dispersing the nanoparticles in the above-mentioned carrier material and selecting an appropriate ratio of the carrier material and the semiconductor particles. The ratio of nanoparticles over semiconductor particles may be in the range 1 to 20, or 2 to 10.

It is specified above that the single layer comprises the first semiconductor material and the nanoparticles. The single layer may also comprise a second semiconductor material. The second semiconductor material of the single layer may be composed of semiconductor particles in the multilayer structure. The semiconductor particles of the first semiconductor material and the semiconductor particles of the second material may be evenly combined or mixed. As specified above, the nanoparticles may be evenly dispersed within the multilayer structure, which contributes to an optimal interaction between the nanoparticles and both semiconductor materials. The second semiconductor material may have the initially described features of the first semiconductor material but with different energy levels of the trap states. For example, this may be achieved by doping the second semiconductor material. This allows for photons having different wavelengths to be up-converted by the film.

In second aspect of the proposed technology, an assembly is proposed that comprises: a transparent or translucent support sheet, and one or more films according to the first aspect of the proposed technology.

It is understood that the support sheet and the one or more films are arranged sequentially, or stacked, to form a combined layered structure. Neighboring films may be juxtaposed to one another, which means that there are no additional structures between the neighboring films. The semiconductor materials of the films may differ in the energy levels of the trap states. For example, this may be achieved by doping the semiconductor materials differently. This allows for photons having different wavelengths to be up-converted by the assembly.

It is understood that the support sheet may be self-supporting, which means that it can maintain its structural integrity and shape at least without any external loads. The support sheet may be planar. For example, the support sheet may be a sheet of flat glass. Examples of flat glass are, inorganic glass, such a silica-based float glass, and organic glass, such as polycarbonate or acrylic glass. The assembly may be produced by forming the one or more films sequentially on the support sheet.

In a third aspect of the proposed technology, an assembly is proposed that comprises: a plurality of films according to the first aspect of the proposed technology. It is understood that the films are arranged sequentially, or stacked, to form a combined layered structure. Neighboring films may be juxtaposed to one another, which means that there are no additional structures between the neighboring films. As in the second aspect of the proposed technology, the semiconductor materials of the films may differ in the energy levels of the trap states.

In a fourth aspect of the proposed technology, a use of the film according to the first aspect or the assembly according to the third aspect is proposed to cover, or at least partly cover, a transparent or translucent partition of a window, or support sheet, for inhibiting infrared radiation from passing through the window, or for reducing transmittance of infrared radiation through the window. Worded differently, a use of the film according to the first aspect or the assembly according to the third aspect in glazing is proposed.

In a fifth aspect of the proposed technology, a method is proposed in which the film according to the first aspect or the assembly according to the third aspect is applied on a transparent or translucent partition of a window, or support sheet, to form a joint layered structure. It is understood that the film or the assembly may partly or fully cover the partition.

A window is here understood to encompass windows both in buildings and in vehicles, such as the skylight of a house and the windscreen of a car. The film, or the plurality of films, and the partition may jointly form a layered structure. The film and the partition may share any of the features of the abovementioned assembly according to the second aspect of the proposed technology. For example, the partition may be of inorganic glass, such a silica-based glass, or of organic glass, such as polycarbonate or acrylic glass. The partition may be flat or curved and the film may conform to the shape of the partition.

The measures specified above, such as maximum dimensions of particles and thicknesses of layers, may be determined using scanning electron microscopy.

### Brief description of the drawings

A more complete understanding of the abovementioned and other features and advantages of the proposed technology will be apparent from the following detailed description in conjunction with the appended drawings, wherein:
Fig. 1 is a schematic illustration of an embodiment of a film for photon up-conversion,
Figs. 2 to 14 are schematic illustrations of other embodiments of a film for photon up-conversion,
Fig. 15 is a schematic illustration of an embodiment of an assembly including a film for photon up-conversion,
Fig. 16 is a schematic illustration of another embodiment of an assembly including a film for photon up-conversion, and
Fig. 17 is a schematic energy level diagram of TiO2 illustrating the up-conversion process.

### Description of the drawings

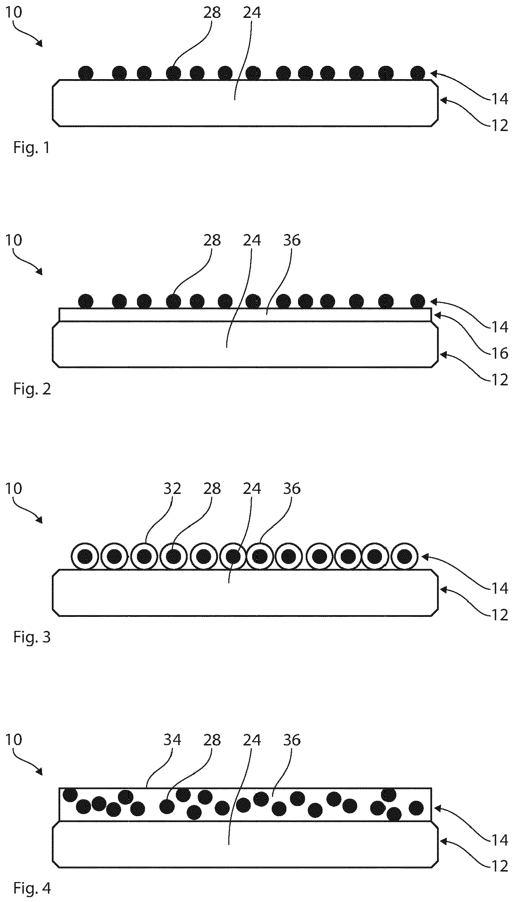

An embodiment of a film 10 for photon up-conversion is shown in **FIG. 1****.** The film 10 has a solid, monolithic, and continuous first semiconductor layer 12 of a first semiconductor material 24. The first semiconductor layer has an average thickness of 200 nm. It further has a *juxtaposed* nanoparticle layer 14 of plasmonic nanoparticles 28 of gold that are *in direct contact* with the first semiconductor layer 12. The nanoparticles 28 are spherical and the average maximum dimension, or diameter, of the nanoparticles is about 20 nm. The nanoparticles 28 are arranged in a sub-monolayer covering about 40% of the first semiconduction layer 12.

In an alternative embodiment, the first semiconductor layer 12 is a powdered layer composed of semiconductor particles having maximum dimensions within the range 40 to 500 nm.

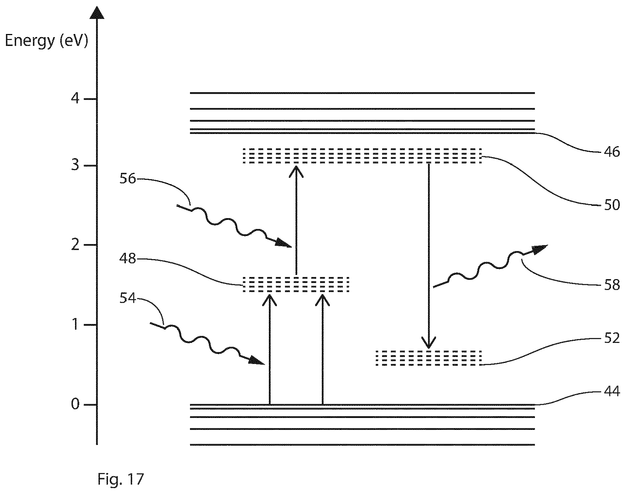

The semiconductor material 24 is TiO2, which has several trap states 48, 50, and 52 between the valance band 44 and a conduction band 46, see Fig. 17. A first trap state 48 has a first energy level, a second trap state 50 has a second energy level, and a third trap state 52 has a third energy level. The first energy level is below the second energy level and above the third energy level relative to the valence band 44. The first trap state 48 is a trap hole state, the second trap state 50 is a trap electron state, and the third trap state 52 is trap hole state. Photo-excitation is possible from the valance band to first strap state and from the first trap state 48 to the second trap state 50, and photo-deexcitation is possible from the second trap state 50 to the third trap state 52.

Localized surface plasmons are formed when light interacts with the nanoparticles 28. With the described architecture, the nanoparticles 28 are thus arranged to enhance photo-excitation from the valence band 44 to the first trap state 48, and from the first trap state 48 to the second trap state 50. The energies of the photons absorbed in the transitions from the valance band 44 to the first strap 48 state and from the first trap state 48 to the second trap state 50 are lower than the energies of the photons emitted in the transition from the second trap state 50 to the third trap state 52, effectively resulting in an up-conversion of the photon energies.

Another embodiment of a film 10 for photon up-conversion is shown in **FIG. 2****.** The film 10 generally corresponds to the film 10 described in relation to Fig. 1 and differs in that the nanoparticles 28 are not in direct contact with the first semiconductor layer 12. Instead, the nanoparticles 28 are spaced apart from the semiconductor layer 12 by a monolithic and continuous first intermediate layer 16 of an electrically insulating material 36 positioned between and juxtaposed to the nanoparticle layer 14 and the first semiconductor layer 12. This means that the nanoparticles are in direct contact with the first intermediate layer 16.

The insulating material 36 is polytetrafluoroethylene that has a relative permittivity of about 2.1. The first intermediate layer 16 further has an average thickness of about 40 nm. This way, the nanoparticles 28 are electrically insulated from the first semiconductor material 24, which prevents charge transfer between the nanoparticles 28 and the first semiconductor material 24 at the formation of localized surface plasmons by the nanoparticles 28.

Another embodiment of a film 10 for photon up-conversion is shown in **FIG. 3****.** The film 10 generally corresponds to the film 10 described in relation to Fig. 1 and differs in that the nanoparticles 28 are not in direct contact with the first semiconductor layer 12. Instead, each nanoparticle 28 has a coating 32 of an electrically insulating material 36 that together with the nanoparticle 28 forms an individual particle. The coating 32 has an average thickness of about 10 nm and the insulating material 36 is of polytetrafluoroethylene. This way, charge transfer is inhibited even though the coated nanoparticles 28 are in direct contact with the first semiconductor material 24.

Another embodiment of a film 10 for photon up-conversion is shown in **FIG. 4****.** The film 10 generally corresponds to the film 10 described in relation to Fig. 1 and differs in that most nanoparticles 28 are not in direct contact with the first semiconductor layer 12. The nanoparticle layer 14 further has a carrier material 34 that supports the nanoparticles 28 relative to the first semiconductor layer 12. The carrier material 34 contacts the first semiconductor material 24. The nanoparticles 28 are dispersed within the carrier material 34 with an average distance of 25 nm between neighboring nanoparticles 28. The average thickness of the nanoparticle layer is about 70 nm.

The carrier material 34 is of polyethylene that is electrically insulating, thus also constituting an insulating material 36. This way, most nanoparticles 28 are insulated from the first semiconductor material 24 by an electrically insulating material, and charge transfer between the nanoparticles 28 and the semiconductor material 24 is inhibited.

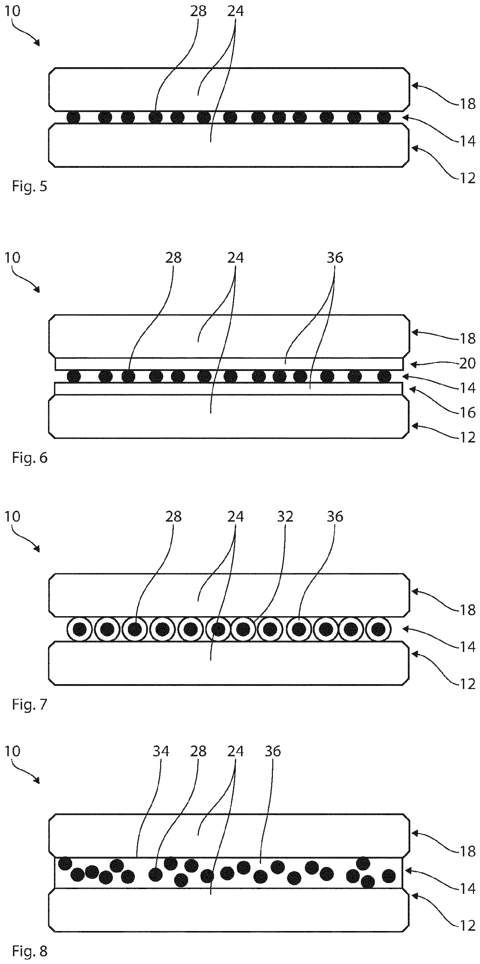

Another embodiment of a film 10 for photon up-conversion is shown in **FIG. 5****.** The film 10 generally corresponds to the film 10 described in relation to Fig. 1 and differs in that it further has a solid, monolithic, and continuous second semiconductor layer 18 of a second semiconductor material 26. The second semiconductor material 26 is also TiO2. In alternative embodiments, the second semiconductor material 26 is doped such that the trap states 48, 50, and 52 have different energy levels.

The second semiconductor layer 18 has the same average thickness as the first semiconductor layer 16. In alternative embodiments the thicknesses differ. The second semiconductor layer 18 is juxtaposed to the nanoparticle layer 14 and the plasmonic nanoparticles 28 are in direct contact with the second semiconductor layer 18.

The above-described localized surface plasmons formed when light interacts with the nanoparticles 28 will also enhance photo-excitation in the second semiconductor material 26, which contributes to an improved up-conversion of the film 10.

Another embodiment of a film 10 for photon up-conversion is shown in **FIG. 6****.** The film 10 generally corresponds to the film 10 described in relation to Fig. 5 and differs in that the nanoparticles 28 are not in direct contact with the first semiconductor layer 12. It further has a first intermediate layer 16 arranged as described in relation to Fig. 2 and a monolithic and continuous second intermediate layer 20 arranged between the nanoparticle layer 14 and the second semiconductor layer 18.

The first intermediate layer 16 is juxtaposed to both the first semiconductor layer 12 and the nanoparticle layer. Similarly, the second first intermediate layer 20 is juxtaposed to both the second semiconductor layer 18 and the nanoparticle layer 14. The second intermediate layer 20 is of the same electrically insulating material 36 and has the same thickness as the first semiconductor layer 12. This way, the nanoparticles 28 are electrically insulated from both the first semiconductor material 24 and the second semiconductor material 26, which contributes to inhibit charge transfer.

Another embodiment of a film 10 for photon up-conversion is shown in **FIG. 7****.** The film 10 generally corresponds to the film 10 described in relation to Fig. 3 and differs in that it further has a solid, monolithic, and continuous second semiconductor layer 18 of a second semiconductor material 26. The second semiconductor material 26 is the same as the first semiconductor material 24 and the second semiconductor layer 18 has the same average thickness as the first semiconductor layer 16. The coating 32 of the electrically insulating material 36 also spaces the nanoparticles 28 apart from the second semiconductor material 26, which means that the nanoparticles 28 are not in direct contact also with the second semiconductor layer 18. This way, charge transfer is inhibited even though the coated nanoparticles 28 are in direct contact with the second semiconductor material 26.

Another embodiment of a film 10 for photon up-conversion is shown in **FIG. 8****.** The film 10 generally corresponds to the film 10 described in relation to Fig. 4 and differs in that it further has a solid, monolithic, and continuous second semiconductor layer 18 of a second semiconductor material 26. The second semiconductor material 26 is the same as the first semiconductor material 24 and the second semiconductor layer 18 has the same average thickness as the first semiconductor layer 16. The carrier material 34 contacts also the second semiconductor material 26. This way, most nanoparticles 28 are insulated from both the first semiconductor material 24 and the second semiconductor material 26, and charge transfer between the nanoparticles 28 and both the first semiconductor material 24 and the second semiconductor material 26 is inhibited.

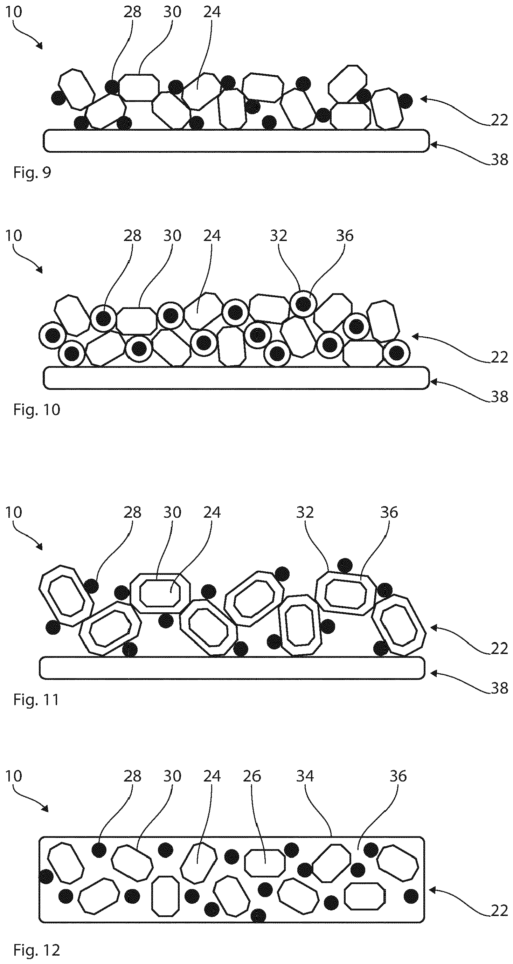

Another embodiment of a film 10 for photon up-conversion is shown in **FIG. 9****.** The film 10 has a single layer 22 including a first semiconductor material 24 in the form of semiconductor particles 30 forming a multilayer structure and nanoparticles 28 dispersed within the multilayer structure. Most of the nanoparticles 28 are in direct contact with the semiconductor particles 30, and in extension with the first semiconductor material 24. The single layer 22 is supported by a support layer 38 of polyacrylate. The nanoparticles 28 share the features of those described in relation to Fig. 1. The first semiconductor material 24 is TiO2 and the semiconductor particles 30 have an average maximum dimension that is about four times greater than the average maximum dimension of the nanoparticles 28. As described above, localized surface plasmons are formed when light interacts with the nanoparticles 28. The architecture of the single layer 22 arranges the nanoparticles 28 to enhance photo-excitation in the first semiconductor material 24, effectively allowing for up-conversion of photons within the first semiconductor material 24.

In an alternative embodiment, the single layer 22 includes a second semiconductor material (not shown) in the form of additional semiconductor particles (not shown) that are evenly mixed with the semiconductor particles 30 of the first semiconductor material 24. The second semiconductor material (not shown) is doped TiO2 with different energy levels of the trap states than the non-doped TiO2 of the first semiconductor material 24. Effectively, the single layer 22 then allows for photon up-conversions of additional photon energies.

Another embodiment of a film 10 for photon up-conversion is shown in **FIG. 10****.** The film 10 generally corresponds to the film 10 described in relation to Fig. 9 and differs in that the nanoparticles 28 are not in direct contact with the first semiconductor material 24. Instead, each nanoparticle 28 has a coating 32 of an electrically insulating material 36 that together with the nanoparticle 28 form an individual particle. The coating 32 has an average thickness of about 10 nm and the insulating material 36 is of polytetrafluoroethylene. This way, the nanoparticles 28 are spaced apart from neighboring semiconductor particles 30 by at least 10nm, and charge transfer is inhibited even though the coated nanoparticles 28 are in direct contact with the first semiconductor material 24.

Another embodiment of a film 10 for photon up-conversion is shown in **FIG. 11****.** The film 10 generally corresponds to the film 10 described in relation to Fig. 9 and differs in that the nanoparticles 28 are not in direct contact with the first semiconductor material 24. Each semiconductor particle 30 has a coating 32 of an electrically insulating material 36 that together with the semiconductor particle 30 form an individual particle. The coating 32 has an average thickness of about 10 nm and the insulating material 36 is of polyethylene. This way, the nanoparticles 28 are spaced apart from neighboring semiconductor particles by at least 10nm, and charge transfer is inhibited.

Another embodiment of a film 10 for photon up-conversion is shown in **FIG. 12****.** The film 10 has a single layer 22 including a carrier material 24, a first semiconductor material 24 in the form of semiconductor particles 30, and nanoparticles 28 that jointly form a continuous structure with the semiconductor particles 30 and nanoparticles 28 dispersed within the carrier material 34. The single layer 22 has an average thickness of about 10 pm. The number of nanoparticles 28 and the number of semiconductor particles 30 in a given volume is about the same. The carrier material 34 is polyacrylate and the semiconductor particles 30 and the nanoparticles 28 generally correspond to those described in relation to Fig. 9. The carrier material 34 is electrically insulating, and neighboring nanoparticles 28 and semiconductor particles 30 are generally spaced apart from one another and have an average distance of about 15 nm. This way, charge transfer between the nanoparticles 28 and the semiconductor particles 30 is inhibited.

In an alternative embodiment, the single layer 22 includes a second semiconductor material (not shown) in the form of semiconductor particles (not shown) that are dispersed within the carrier material 34 and evenly mixed with the semiconductor particles 30 of the first semiconductor material 24. The second semiconductor material (not shown) is doped TiO2 with different energy levels of the trap states than the non-doped TiO2 of the first semiconductor material 24. Effectively, the single layer 22 then allows for photon up-conversions of additional photon energies.

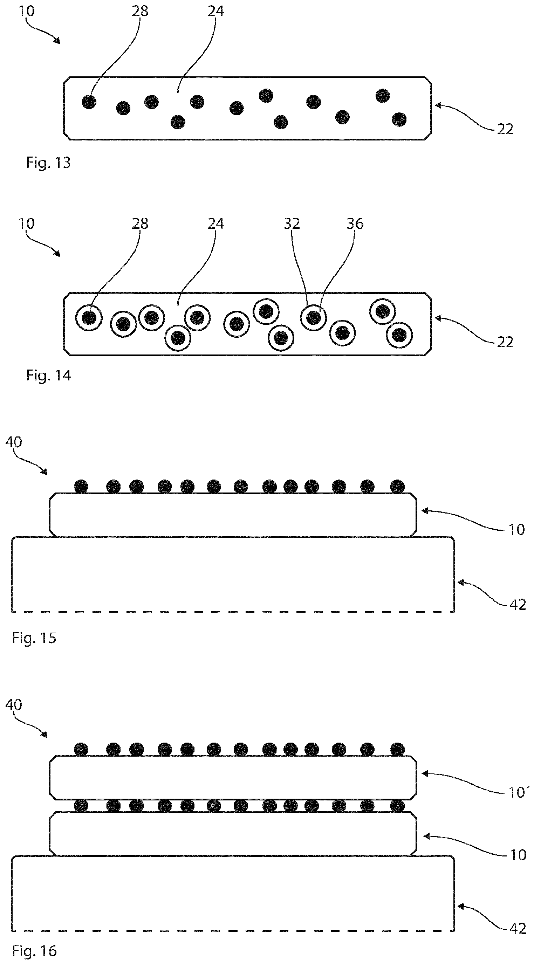

Another embodiment of a film 10 for photon up-conversion is shown in **FIG. 13****,** The film 10 has a single layer 22 composed of a first semiconductor material 24 and nanoparticles 28. The nanoparticles 28 are in direct contact with the first semiconductor material 24. The first semiconductor material 24 and the nanoparticles 28 form a continuous and solid structure. The nanoparticles 28 are dispersed within the first semiconductor material 24 and in direct contact with the first semiconductor material 24. With this architecture, up-conversion in the first semiconductor material 24 is possible, as described in relation to Fig.1.

Another embodiment of a film 10 for photon up-conversion is shown in **FIG. 14****.** The film 10 generally corresponds to the film 10 described in relation to Fig. 13 and differs in that the nanoparticles 28 are not in direct contact with the first semiconductor material 24. Each nanoparticle particle 28 has a coating 32 of an electrically insulating material 36 that together with the nanoparticle particle 28 forms an individual particle. The coating 32 has an average thickness of about 10 nm and the insulating material 36 is of a ceramic. This way, the nanoparticles 28 are spaced apart from the first semiconductor material 24 by about 10nm, and charge transfer is inhibited.

An embodiment of an assembly 40 is shown in **Fig. 15****.** The assembly 40 has a transparent support sheet 42 in the form of a sheet of flat glass. This means that the support sheet 42 is self-supporting and planar. The assembly 40 further has a film 10 for photon up-conversion. The film 10 corresponds to the film described in relation to Fig. 1. In other embodiments, the film 10 corresponds to any of the films described in relation to Figs. 2 to 14.

Another embodiment of an assembly 40 is shown in **Fig. 16****.** The assembly 40 differs from the support sheet 40 described in relation to Fig. 15 by having an additional film 10' that generally corresponds to the film 10 in Fig. 15 but having a first semiconductor material 24 with different energy levels of the trap states 48, 50, and 52, thus allowing for photons having different wavelengths to be up-converted by the assembly 40. The support sheet 42, the film 10, and the additional film 10' are arranged sequentially and the latter two are juxtaposed to one another.

### Proof-of-concept

A semiconductor layer of was prepared via spin-coating using commercially available Solaronix TiO2 paste on a substrate of fluorinated tin oxide. This was subsequently, annealed at 773 K for 1h. A cross-section analysis was performed by Scanning Electron Microscopy (SEM), which showed that the resulting semiconductor material of TiO2 was about 200 nm thick. After annealing, the semiconductor material become highly transparent in the visible region. X-ray diffraction pattern (XRD) revealed the characteristic peaks for anatase and rutile with an anatase abundance of 80%

Au nanoparticles were provided with maximum dimensions in the range 8-10 nm. The dimensions were determined using dynamic light scattering (DLS) and by SEM. The nanoparticles were deposited via spray deposition followed by annealing at 773 K for 1h. The resulting film generally corresponds to the film described in relation to Fig. 1. UV-Vis absorption was carried out to confirm the presence of the nanoparticles. The characteristic peak for Au Localized Surface Plasmon Resonance (LSPR) centered at 550 nm was identified. The spectrum also showed the absorption of TiO2 trap states throughout the visible region.

Room temperature excitation of TiO2 at 320 nm revealed two emissive states. The most prominent was centered at 525 nm and a weaker one was identified in the infrared region between 800 and 1200 nm. To determine the energy levels involved in the 525 nm emissive state, the film was excited by sub-bandgap energy photons at 400 nm. This revealed that the emissive state is detectable even when sub-bandgap energies are used, which confirms the existence of populatable trap states below the TiO2 conduction band.

**Fig. 17** shows an energy levels diagram of TiO2 with the states involved in the 525 nm and 800 nm transitions indicated. The first trap state 48 is at 1.55 eV, the second trap state 50 is at 3.10 eV, and the third trap state 52 is at 0.74 eV. The second trap state 50 can be filled with electrons either by excitation from the valence band 44 or from lower laying trap states, or by decay from the conduction band 46 after bandgap excitation. Electrons in the second trap state 50 preferentially recombine with shallow trap holes states, such as the first trap state 48 resulting in 800 nm emission or the third trap state 52 resulting in a 525 nm emission. The addition of gold nanoparticles increased the photoluminescence quantum yield when excited at 320 and 400 nm due to increased photon absorption by TiO2.

A film without nanoparticles (TiO2) was subjected to light at 800 nm at room temperature and a time- and energy-resolved photoluminescence was recoded that showed a clear emission signal between 400-600 nm with a maximum at 525 nm, resembling the abovementioned signals observed when excited at 320 and 400 nm. A corresponding film with nanoparticles (Au/TiO2) was investigated in the same way. The photoluminescence signal became about twenty times more intense. The strength of the photoluminescence signal became more pronounced at lower temperatures.

Analysis of the kinetic traces extracted at 525 nm revealed an ultrafast decay < 10 ps that was unaffected by the presence of Au nanoparticles. The shape of the emission is sharp, resembling laser light emission signals after achieving population inversion.

The 800 nm excitation does not overlap with Au LSPR. Nevertheless, this wavelength can excite plasmon resonance, which was confirmed using an ultrafast Transient Absorption Spectroscopy (TAS). The TAS of Au/TiO2 at an 800 nm excitation had the characteristic bleach at the LSPR maximum and a "winglet". Ultrafast Transient Infrared Absorption Spectroscopy (TIRAS) measurements were performed showing that excitation of nanoparticles at 800 nm did not lead to electron injection into the TiO2 semiconductor material. This contrasts to what was observed when the system was excited at 550 nm, at which there is an apparent positive infrared absorption related to hot electron injection into the TiO2 conduction band coming from Au LSPR excitation. Power-dependence transient photoluminescence experiments were performed revealing that the observed up-conversion process involves three photons.

In summary, LSPR is achieved by photons at 550 nm. This enhances the excitations of electrons from the valance band 44 to the first trap state 48. In the established model, two electrons in the valance band 44 are excited into the first trap state 48 by 800 nm photons 54. An electron is excited from the first trap state 48 to the second trap state 50 by an 800 nm photon 56. The electron in the second trap state 50 then recombines with the shallow third trap state 52, resulting in the emission of a 525 nm photon 58.

### Item list

- 10: film
- 12: first semiconductor layer
- 14: nanoparticle layer
- 16: first intermediate layer
- 18: second semiconductor layer
- 20: second intermediate layer
- 22: single layer
- 24: first semiconductor material
- 26: second semiconductor material
- 28: nanoparticle
- 30: semiconductor particle
- 32: coating
- 34: carrier material
- 36: insulating material
- 38: support layer
- 40: assembly
- 42: support sheet
- 44: valance band
- 46: conduction band
- 48: first trap state
- 50: second trap state
- 52: third trap state
- 54: 800 nm photon
- 56: 800 nm photon
- 58: 525 nm photon

## Claims

1. A film (10) for photon up-conversion, wherein the film (10) comprises:
- a first semiconductor material (24), and
- nanoparticles (28),
wherein the first semiconductor material (24) has a valance band (44) and a conduction band (46),
wherein the first semiconductor material (24) further has a first trap state (48), a second trap state (50), and a third trap state (52) between the valance band (44) and the conductions band,
wherein the first trap state (48) is below the second trap state (50) and above the third trap state (52), photo-excitation is possible from the valance band (44) to first strap state and from the first trap state (48) to the second trap state (50), and photo-deexcitation is possible from the second trap state (50) to the third trap state (52), and
wherein the nanoparticles (28) are plasmonic nanoparticles (28) arranged to enhance photo-excitation from the valence band to at least the first trap state (48) at a formation of localized surface plasmons by the nanoparticles (28).

2. The film (10) according to claim 1, wherein the nanoparticles (28) are arranged to form localized surface plasmons by photons having wavelengths in the visible range.

3. The film (10) according to claim 1 or 2, wherein the nanoparticles (28) are insulated from the first semiconductor material (24) by an electrically insulating material (36).

4. The film (10) according to any of the claims 1 to 3, wherein the film (10) comprises:
- a first semiconductor layer (12) of the first semiconductor material (24), and
- a nanoparticle layer (14) comprising the nanoparticles (28),
wherein the first semiconductor layer (12) and the nanoparticle layer (14) form a layered structure.

5. The film (10) according to claim 4, wherein the first semiconductor layer (12) is a solid layer of the first semiconductor material (24).

6. The film (10) according to claim 4 or 5, wherein the nanoparticles (28) are in direct contact with the first semiconductor layer (12).

7. The film (10) according to claim 4, wherein the nanoparticle layer (14) comprises a carrier material (34) that supports the nanoparticles (28) relative to the first semiconductor layer (12), wherein the nanoparticles (28) are dispersed within the carrier material (34).

8. The film (10) according to claim 4 or 5, wherein the film (10) further comprises a first intermediate layer (16) positioned between the first semiconductor layer (12) and the nanoparticle layer (14), and the first intermediate layer (16) is formed from an electrically insulating material (36).

9. The film (10) according to any of the claims 4 to 8, wherein the film (10) further comprises a second semiconductor layer (18) of the first semiconductor material (24) .

10. The film (10) according to claim 9, wherein the nanoparticles (28) are in direct contact with the second semiconductor layer (18).

11. The film (10) according to claim 9, wherein the film (10) further comprises a second intermediate layer (20) positioned between the second semiconductor layer (18) and the nanoparticle layer (14), and the second intermediate layer (20) is formed from an electrically insulating material (36) .

12. The film (10) according to claim 1 or 2, wherein the film (10) further comprises:
- a single layer (22) comprising the first semiconductor material (24) and the nanoparticles (28),
wherein the nanoparticles (28) are dispersed within the single layer (22).

13. The film (10) according to claim 12, wherein the first semiconductor material (24) of the single layer (22) forms a continuous solid structure with the nanoparticles (28) dispersed within the first semiconductor material (24).

14. The film (10) according to claim 12, wherein the first semiconductor material (24) of the single layer (22) comprises semiconductor particles (30), wherein the nanoparticles (28) are blended with the semiconductor particles (30).

15. An assembly (40) comprising:
- a transparent or translucent support sheet (42), and
- one or more films (10, 10') according to any of the claims 1 to 14,
wherein the support sheet (42) and the one or more films (10, 10') are arranged sequentially to form a combined layered structure.
